# EUROPÄISCHE PATENTSCHRIFT

(11) **EP 1 961 787 B1**
(45) Veröffentlichungstag und Bekanntmachung des Hinweises auf die Patenterteilung: **15.04.2009**
(21) Anmeldenummer: 07002642.2
(22) Anmeldetag: 07.02.2007
(51) Int. Cl.: C08L 77/00, C08L 77/02, C08L 77/04, C08L 77/06, C08L 77/10

(54) **Gefüllte Polyamidformmassen mit reduzierter Wasseraufnahme**
Filled polyamide moulding material with reduced water absorption
Masses de formage remplies de polyamide dotées d'une réception d'eau réduite

(43) Veröffentlichungstag der Anmeldung: 27.08.2008
(73) Patentinhaber: EMS-CHEMIE AG, 7013 Domat/Ems (CH)
(72) Erfinder: Rexin, Ornulf, 69120 Heidelberg (DE); Aepli, Etienne, 7013 Domat/Ems (DE)
(74) Vertreter: Becker Kurig Straus

(56) Entgegenhaltungen:
- EP-A- 1 245 640
- EP-A2- 0 957 131
- WO-A-02/40591

## Beschreibung

Die vorliegende Erfindung betrifft gefüllte Polyamidformmassen, insbesondere Polyamidformmassen mit mittlerem Füllgrad, die aus einem Polyamidblend und beispielsweise durch Compoundierung mit geschnittenen oder Endlosfasern auf Zweischneckenextrudern herstellbar sind und eine Kombination von reduzierter Wasseraufnahme und guten mechanischen Eigenschaften aufweisen, was sich am hergestellten Formteil, wie z. B. an Antennengehäusen von mobilen oder stationären Kommunikationsgeräten, in einer sehr guten Dimensionsstabilität und einer verringerten Schwankung der elektrischen Eigenschaften auswirkt.

Die erfindungsgemäßen, thermoplastischen Polyamidformmassen eignen sich zur Herstellung von Formkörpern oder anderen Halbzeugen oder Fertigteilen, die z. B. durch Extrusion, Spritzguss, Pressen, Direktverfahren bzw. Direktcompounding, bei dem die compoundierte Polyamidformmasse direkt durch Spritzguss verarbeitet wird oder anderen Verformungstechniken herstellbar sind.

Schließlich betrifft die Erfindung die Verwendung der gefüllten Polyamidformmassen zur Herstellung von Antennengehäusen für mobile oder stationäre Kommunikationsgeräte verwendet. Diese Formteile weisen eine deutlich verringerte Schwankung der elektrischen Eigenschaften auf, d. h. die Sende- bzw. Empfangsleistung schwankt wenig bei veränderlicher Umgebungsfeuchte.

Gefüllte Polyamidblends spielen eine zunehmende Rolle im Bereich der technischen Konstruktionswerkstoffe, da sie gute mechanische Eigenschaften zeigen. Einsatzgebiete sind, z. B. Innen- und Außenteile im Automobilsektor und im Bereich von anderen Transportmitteln, Gehäusematerial für Geräte und Apparate für die Telekommunikation, Unterhaltungselektronik, Haushaltsapparate, Maschinenbau, Heizungsbereich und Befestigungsteile für Installationen.

Der besondere Vorteil von gefüllten Polyamiden liegt im außergewöhnlich guten Verbund zwischen Polymermatrix und Füllstoffen, besonders bei verstärkend wirkenden faserförmigen Füllstoffen. Die Maßhaltigkeit der daraus hergestellten Formteile genügt allerdings infolge der hohen Wasseraufnahme nicht allen Anforderungen.

Im folgenden sollen in der vorliegenden Anmeldung unter Polyamiden solche Polymere verstanden werden, deren Grundbausteine durch Amid-Bindungen (-NH-CO-) zusammengehalten werden und die sich durch Polykondensation oder Polymerisation aus Monomeren, wie z. B. Dicarbonsäuren, Dicarbonsäurehalogeniden, Diaminen, Aminocarbonsäuren und/oder Lactamen, herstellen lassen. Es kann sich dabei um Homo- oder Copolyamide handeln. Das Zahlenmittel des Molekulargewichts der Polyamide sollte über 5.000, vorzugsweise über 10.000 liegen.

EP 0 441 423 B1 beschreibt Polyamidharzzusammensetzungen mit guten mechanischen Eigenschaften und relativ geringen Werten für die Wasseraufnahme, enthaltend zwingend Polyamid 46, sowie ein aliphatisches Polyamid mit einem Verhältnis von CH₂/NHCO Gruppen von 6 bis 11 im Polyamidrückgrad und einem amorphen Polyamid mit einem Tg von über 100°C sowie gegebenenfalls Füllstoffe. Die in EP 0 441 423 B 1 angegeben Werte für die Wasseraufnahme geben noch nicht den Gleichgewichtswert wieder, da nur 24 h gelagert wurde, trotzdem liegt der tiefste Wert bei 2,6 %.

EP 0 728 812 A1 beschreibt thermoplastische Formmassen aus teilaromatischen und amorphen Copolyamiden, welche optional faser- und andere teilchenförmige Füllstoffe und kautschukelastische Polymerisate enthalten. Diese Formmassen sollen verbesserte mechanische Eigenschaften aufweisen und für hohe Dauergebrauchstemperaturen einsetzbar sein und zusätzlich eine gute Lösungs- und Ölbeständigkeit aufweisen. EP 0 728 812 A1 verwendet als Basispolyamid A) keine aliphatischen Polyamide, sondern teilaromatische Copolyamide, welche zwingend Terephthalsäure, Isophthalsäure, Hexamethylendiamin und ein cycloaliphatisches Diamin enthalten. Zur Wasseraufnahme der Formmassen wird keine Aussage gemacht.

EP 0 400 428 A1 beschreibt thermoplastische Formmassen aus teilaromatischen Copolyamiden, gegebenenfalls aliphatischen Polyamiden mit Adipinsäure als Monomer und gegebenenfalls Caprolactam. Die thermoplastischen Formmassen gemäß EP 0 400 428 A1 sollen ein gutes Gesamtspektrum an mechanischen Eigenschaften, insbesondere hohe Zähigkeitsniveaus, aufweisen. EP 0 400 428 A1 verwendet als Basispolyamid A) keine aliphatischen Polyamide, sondern teilaromatische Copolyamide, welche zwingend 6T-Einheiten und Caprolactam und/oder 66-Einheiten enthalten. Zur Wasseraufnahme der Formmassen wird keine Aussage gemacht.

Aufgabe der vorliegenden Erfindung ist es daher, Polyamidformmassen mit geringer Wasseraufnahme und guten mechanischen Eigenschaften bereitzustellen, was sich im hergestellten Formteil in einer sehr guten Dimensionsstabilität und einer deutlich verringerten Schwankung der elektrischen Eigenschaften auswirkt.

Diese Aufgabe wird durch die gefüllten Polyamidformmassen gemäß Anspruch 1 gelöst, mit einer Polyamidmatrix aus einem Blend aus Polyamid 613 und/oder Polyamid 614 und/oder Polyamid 615 und/oder Polyamid 616 und/oder Polyamid 617 und/oder Polyamid 618 (A) und einem Copolyamid 6I/6T bzw. Polyamid 6I (B) sowie mindestens einem faser- oder teilchenförmigen Füllstoff (C), ausgewählt aus der Gruppe, bestehend aus Glasfasern, Kohlenstofffasern, Metallfasern, Aramidfasern, Whiskers, Talk, Glimmer, Silikaten, Quarz, Titandioxid, Wollastonit, Kaolin, Kieselsäuren, Magnesiumcarbonat, Magnesiumhydroxid, Kreide, gemahlenem oder gefälltem Calciumcarbonat, Kalk, Feldspat, Bariumsulfat, permanentmagnetischen oder magnetisierbaren Metallen oder Legierungen, Glaskugeln, Hohlglaskugeln, hohlkugeligen Silikatfüllstoffen, natürlichen Schichtsilikaten, synthetischen Schichtsilikaten und Mischungen hiervon.

Aufgrund der geringen Wasseraufnahme zeichnen sich die aus den erfindungsgemäßen Polyamidformmassen hergestellten Formteile durch eine sehr gute Dimensionsstabilität und durch eine verringerte Schwankung in den elektrischen Eigenschaften gegenüber Formmassen basierend auf Polyamid 6 oder Polyamid 66 aus.

Die Erfindung betrifft daher gefüllte Polyamidformmassen mit geringer Wasseraufnahme und guten mechanischen Eigenschaften auf Basis von Polyamid 613, Polyamid 614, Polyamid 615, Polyamid 616, Polyamid 617, Polyamid 618, aus einem Blend, bestehend im wesentlichen aus den folgenden Komponenten:
(A) wenigstens ein aliphatisches Polyamid aus der Gruppe, bestehend aus Polyamid 613, Polyamid 614, Polyamid 615, Polyamid 616, Polyamid 617, Polyamid 618, oder deren Gemische,
(B) Polyamid, aufgebaut aus
   (b₁) 60 bis 100 Gew.-Teile Einheiten, bevorzugt 60 bis 80 Gew.-Teile Einheiten, besonders bevorzugt 67 Gew.-Teile Einheiten, welche sich von Isophthalsäure (I) in Kombination mit Hexamethylendiamin (6) in nahezu äquimolarem Verhältnis ableiten,
   (b₂) 0 bis 40 Gew.-Teile Einheiten, bevorzugt 20 bis 40 Gew.-Teile Einheiten, besonders bevorzugt 33 Gew.-Teile Einheiten, welche sich von Terephthalsäure (T) in Kombination mit Hexamethylendiamin (6) in nahezu äquimolarem Verhältnis ableiten,
   wobei die Gewichtsteile der Komponenten (b₁) und (b₂) zusammen 100 Gew.-Teile ergeben,
   und
   wenigstens eine Füllstoffkomponente (C):
(C) ausgewählt aus der Gruppe, bestehend aus Glasfasern, Kohlenstofffasern, Metallfasern, Aramidfasern, Whiskers, Talk, Glimmer, Silikaten, Quarz, Titandioxid, Wollastonit, Kaolin, Kieselsäuren, Magnesiumcarbonat, Magnesiumhydroxid, Kreide, gemahlenem oder gefälltem Calciumcarbonat, Kalk, Feldspat, Bariumsulfat, permanentmagnetischen oder magnetisierbaren Metallen oder Legierungen, Glaskugeln, Hohlglaskugeln, hohlkugeligen Silikatfüllstoffen, natürlichen Schichtsilikaten, synthetischen Schichtsilikaten und Mischungen hiervon,
wobei die Gewichtsprozente der Komponenten (A) bis (C) zusammen 100% ergeben, und
wobei die Komponenten (A), (B) und (C) die folgenden Bedingungen erfüllen:
- (A) + (B):: 80 bis 20 Gew.-%,
- Gewichtsverhältnis (A)/(B):: 60/40 bis 90/10, bevorzugt 70/30 bis 85/15, besonders bevorzugt 70/30 bis 80/20, ganz besonders bevorzugt 75/25,
- (C):: 20 bis 80 Gew.-%, bevorzugt 21 bis 70 Gew.-%, besonders bevorzugt 31 bis 64 Gew.-%,
wobei die Polyamidformmassen gegebenenfalls zu den Komponenten (A) bis (C) übliche Zusatzstoffe (D) enthalten, und wobei deren Menge additiv zur Summe der Komponenten (A) bis (C) ist.

Weiterhin betrifft die Erfindung ein Verfahren zur Herstellung der Polyamidformmassen auf üblichen Compoundieranlagen bei Zylindertemperaturen von 260 °C bis 320 °C, wobei man zunächst den polymeren Anteil aufschmilzt und dann die Füllstoffe dosiert.

Die erfindungsgemäßen Formmassen können zur Herstellung von Formkörpern, insbesondere von Spritzgussteilen, besonders bevorzugt zur Herstellung von Antennengehäusen von mobilen oder stationären Kommunikationsgeräten, verwendet werden. Diese Formteile zeigen aufgrund der geringen Wasseraufnahme, u.a. eine gute Dimensionsstabilität, eine geringe Veränderung der Dielektrizitätszahl (εᵣ) und des Verlustwinkels (tan δ) und eine gute Hydrolysestabilität.

In den Unteransprüchen sind weitere vorteilhafte Ausführungsformen der Erfindung enthalten.

Unter Whiskers sind nadelförmige Einkristalle aus Metallen, Oxiden, Boriden, Carbiden, Nitriden, Polytitanat, Kohlenstoff usw. mit meist polygonalem Querschnitt zu verstehen, z. B. Kaliumnitanat-, Aluminiumoxyd-, Siliciumcarbid-Whiskers. Whiskers weisen im Allgemeinen einen Durchmesser von 0,1 bis 10 µm und eine Länge im mm- bis cm-Bereich auf. Gleichzeitig weisen sie eine hohe Zugfestigkeit auf. Hergestellt werden können Whiskers durch Abscheidung aus der Gasphase am Festkörper (VS-Mechanismus) oder aus einem Dreiphasensystem (VLS-Mechanismus).

Die Glasfasern weisen einen Durchmesser von 5 bis 20 µm, bevorzugt von 5 bis 15 µm und besonders bevorzugt von 5 bis 10 µm auf. Dabei werden vorzugsweise Glasfasern mit einem runden, ovalen, elliptisch oder rechteckigen Querschnitt verwendet.

Vorzugsweise können auch Glasfasern mit nichtkreisförmigen Querschnitt ("flache Glasfasern"), insbesondere ovale, elliptische oder rechteckige, in den erfindungsgemäßen Formmassen eingesetzt werden. Diese Formmassen zeigen dann Vorteile hinsichtlich der Steifheit und Festigkeit, insbesondere in Querrichtung, bei den aus den Formmassen hergestellten Formteilen.

Die Glasfasern bestehen dabei bevorzugt aus E-Glas. Die Glasfasern können dabei als Endlosfasern oder als geschnittene Glasfasern zugesetzt werden, wobei die Fasern mit einem geeigneten Schlichtesystem und einem Haftvermittler bzw. Haftvermittlersystem, z. B. auf Silanbasis, ausgerüstet sein können.

Als Antistatika können in den erfindungsgemäßen Formmassen z. B. Ruß und/oder Kohlenstoffnanoröhrchen eingesetzt werden.

Die Verwendung von Russ kann aber auch der Verbesserung der Schwarzfärbung der Formmasse dienen.

Als Schichtsilikate können in den erfindungsgemäßen Formmassen, z. B. Kaoline, Serpentine, Talkum, Glimmer, Vermiculite, Illite, Smectite, Montmorillonit, Hectorit, Doppelhydroxyde oder Gemische davon eingesetzt werden. Die Schichtsilikate können oberflächenbehandelt, aber auch unbehandelt sein.

Als Stabilisatoren bzw. Alterungsschutzmittel können in den erfindungsgemäßen Formmassen, z. B. Antioxidantien, Antiozonantien, Lichtschutzmittel, UV-Stabilisatoren, UV-Absorber oder UV-Blocker eingesetzt werden.

Das aliphatische Polyamid A) besitzt eine relative Viskosität zwischen 1,4 und 2,5, bevorzugt 1,5 und 2,1 (0,5 Gew.-%-ige Lösung in m-Kresol, 20°C).

Als aliphatisches Polyamid A) wird bevorzugt Polyamid 614 oder Polyamid 618 oder deren Mischung verwendet, besonders bevorzugt findet Polyamid 614 Verwendung.

Eine noch höhere Zähigkeit kann bei Verwendung speziell dünner Glasfasern mit einem Durchmesser unter 10 µm erreicht werden.

Die Herstellung der erfindungsgemäßen Polyamidformmassen kann auf üblichen Compoundiermaschinen, wie z. B. ein- oder zweiwelligen Extrudern oder Schneckenknetern erfolgen. In der Regel wird zunächst der polymere Anteil aufgeschmolzen und an einer nachfolgenden Stelle des Extruders der Füllstoff, z. B. mittels eines Sidefeeders eingetragen. Wird mehr als ein Füllstoff verwendet, können diese an der gleichen Stelle oder an verschiedenen Stellen des Extruders zugegeben werden. Die Compoundierung erfolgt bevorzugt bei eingestellten Zylindertemperaturen von 260 °C bis 320 °C. Der polymere Anteil und die Füllstoffe können aber auch gemeinsam in den Einzug dosiert werden.

Die erfindungsgemäßen Polyamidformmassen können des weiteren durch die bekannten Verfahren zur Herstellung von langfaserverstärktem Stäbchengranulat erzeugt werden, insbesondere durch Pulltrusionsverfahren, bei denen der endlose Faserstrang (Roving) mit der Polymerschmelze vollständig durchtränkt und anschließend abgekühlt und geschnitten wird. Das auf diese Art und Weise erhaltene langfaserverstärkte Stäbchengranulat kann mit den üblichen Verarbeitungs-verfahren zu Formteilen weiterverarbeitet werden, besonders gute Eigenschaften des Formteils werden mit schonenden Verarbeitungsverfahren erreicht.

Die erfindungsgemäß in einer Alternative als Roving eingesetzten Glasfasern weisen einen Durchmesser von 10 bis 20 µm, bevorzugt von 12 bis 18 µm auf, wobei der Querschnitt der Glasfasern rund, oval, elliptisch oder eckig ist.

Insbesondere werden erfindungsgemäß E-Glasfasern als geschnittene Glasfasern oder als Endlosfasern (Roving) verwendet. Es können aber auch alle anderen Glasfasersorten, wie z. B. A-, C-, D-, M-, S-, R-Glasfasern oder beliebige Mischungen davon oder Mischungen mit E-Glasfasern eingesetzt werden.

Der aus erfindungsgemäßen Formmassen hergestellte Polymerstrang kann mit allen bekannten Granulierungsverfahren zu Granulat verarbeitet werden, wie z. B. durch Stranggranulierung, bei der der Strang in einem Wasserbad abgekühlt und anschließend geschnitten wird. Ab einem Füllstoffgehalt von mehr als 60 Gew.-% empfiehlt sich zur Verbesserung der Granulatqualität die Verwendung einer Unterwassergranulierung bzw. Heißabschlags unter Wasser, bei der die Polymerschmelze direkt durch eine Lochdüse gedrückt und von einem rotierenden Messer in einem Wasserstrom granuliert wird.

Die erfindungsgemäßen Formmassen können bei Zylindertemperaturen von 260 °C bis 320 °C verarbeitet werden, wobei Formtemperaturen von 60 °C bis 130 °C je nach Füllungsgrad der Formmasse zu wählen sind.

Eine weitere Möglichkeit der Herstellung der erfindungsgemäßen Formmassen ist das Vermischen von Granulaten mit z. B. unterschiedlichen Matrices und/oder Füllstoffen zu einem Dryblend, welches anschließend weiterverarbeitet wird. Beispielsweise kann zunächst aus den Komponenten (A) und/oder (B) und den Füllstoffen (C) und gegebenenfalls dem Zusatzstoff (D) jeweils ein Compound in Granulatform hergestellt und diese Granulate anschließend zu einem Dryblend vermischt werden, gegebenenfalls unter Zugabe noch weiterer Granulatmengen von Komponente (A) und/oder (B). Das auf diese Weise hergestellte Dryblend wird anschließend weiterverarbeitet.

Die homogenisierte Granulatmischung (Dryblend) wird in einer Verarbeitungsmaschine, z. B. einer Schneckenspritzgussmaschine zu verstärkten Formkörpern und/oder Hohlkörpern verarbeitet, wobei weitere Granulatmengen an Komponente (A) und/oder (B) hinzugefügt werden können.

Mit der Verarbeitung eines Dryblends können tendenziell bessere mechanische Eigenschaften erzielt werden. Das Mischen des Dryblends verursacht allerdings einen zusätzlichen Herstellungsschritt, welcher die Produktkosten erhöht und damit die Wirtschaftlichkeit verschlechtert. Außerdem kann es durch Vibrationen beim Transport zu einer Entmischung kommen, bedingt durch Dichteunterschiede und/oder Grössenunterschiede der verschiedenen Granulatsorten.

Die aus den erfindungsgemäßen Formmassen hergestellten Formkörper werden zur Herstellung von Innen- und Außenteilen, vorzugsweise mit großen Anforderungen an die Maßhaltigkeit, bevorzugt in einer Umgebung mit wechselnder Feuchte eingesetzt, beispielsweise im Bereich Elektro, Möbel, Sport, Maschinenbau, Sanitär und Hygiene, Medizin, Energie- und Antriebstechnik, Automobil und andere Transportmittel oder Gehäusematerial für Geräte und Apparate für die Telekommunikation, insbesondere Antennengehäuse für mobile, aber auch stationäre Kommunikationsgeräte, Unterhaltungselektronik, Haushaltsapparate, Maschinenbau, Heizungsbereich, oder Befestigungsteile für Installationen oder für Behälter und Lüftungsteile aller Art.

Eine bevorzugte Verwendung der erfindungsgemäßen Formmassen stellt die Herstellung von Antennengehäusen für mobile oder stationäre Kommunikationsgeräte dar. Aufgrund der deutlich reduzierten Wasseraufnahme weist das Formteil bzw. das Gehäuse eine deutlich verringerte Schwankung der elektrischen Eigenschaften auf. Zu den elektrischen Eigenschaften gehört, wie oben schon dargestellt wurde, z.B. die Durchlässigkeit von elektromagnetischer Strahlung, die Dielektrizitätszahl (εᵣ) oder der Verlustwinkel (tan δ). Die Wasseraufnahme führt dabei durch Erhöhung der Dielektrizitätszahl zu einer Signalschwächung.

Die folgenden Beispiele sollen die Erfindung erläutern, ohne sie jedoch einzuschränken.

### Beispiele

Die in den Beispielen und Vergleichsbeispielen verwendeten Materialien sind in Tabelle 1 charakterisiert.

**Tabelle 1**

| **Material** | **Handelsname** | **Relative Viskosität m-Kresol, 0,5 Gew.-%-ig bei 20°C** | **Zusammensetzung in Gew.-%** | **Hersteller** |
|---|---|---|---|---|
| PA 614 | - | 1,93 | - | EMS-CHEMIE AG, Schweiz |
| PA6I/6T | GRIVORY G21 | 1,52 | 2/1 | EMS-CHEMIE AG, Schweiz |
| Glasfaser | Vetrotex EC10-4,5MM 99B | - | - | Saint-Gobain Vetrotex, Frankreich |
| Carbonfaser | Tenax HTA 5N51 6MM | - | - | Toho Tenax Europe GmbH, Deutschland |
| Kalziumcarbonat | Millicarb-OG | - | - | Plüss-Staufer AG, Schweiz |
| PA 66 | Radipol A45 | 2,7 in H₂SO₄, 1 Gew.%-ig | - | Radici Chimica, Italien |
| PA 6 | GRILON A28 | 2,75 in H₂SO₄, 1 Gew.-%-ig | - | EMS-CHEMIE AG, Schweiz |

Die Formmassen der Zusammensetzungen in Tabelle 2 und 3 werden auf einem Zweiwellenextruder der Fa. Werner u. Pfleiderer Typ ZSK25 hergestellt. Die Granulate PA 614 und PA 6I/6T werden in die Einzugszone dosiert. Die Glasfaser wird wie die Carbon- bzw. Kohlenstofffaser über einen Sidefeeder 3 Gehäuseeinheiten vor der Düse in die Polymerschmelze dosiert.

Die Gehäusetemperatur wurde als aufsteigendes Profil bis 310 °C eingestellt. Bei 150 bis 200 upm wurden 10 kg Durchsatz verwendet. Nach Abkühlen der Stränge im Wasserbad wurden nach Granulierung und Trocknung bei 120 °C für 24 h die Granulateigenschaften gemessen.

Die Prüfkörper wurden auf einer Arburg Spritzgießanlage hergestellt, wobei die Zylindertemperaturen mit aufsteigendem Profil von 280 °C bis 310 °C und eine Formtemperatur von 100 °C gewählt wurden.

Die Messungen wurden nach folgenden Normen und an folgenden Prüfkörpern durchgeführt.

### Zug-E-Modul:

ISO 527 mit einer Zuggeschwindigkeit von 1 mm/min
ISO-Zugstab , Norm: ISO/CD 3167, Typ A1, 170 x 20/10 x 4 mm, Temperatur 23 °C

### Reißfestigkeit und Reißdehnung:

ISO 527 mit einer Zuggeschwindigkeit von 5 mm/min
ISO-Zugstab , Norm: ISO/CD 3167, Typ A1, 170 x 20/10 x 4 mm, Temperatur 23 °C

### Relative Viskosität:

ISO 307
0,5 Gew.-%-ige m-Kresollösung
Temperatur 20 °C
Berechnung der relativen Viskosität (RV) nach RV = t/t₀ in Anlehnung an Abschnitt 11 der Norm.

### Wasseraufnahme

ISO 62
Granulat
Temperatur 23 °C
Bei 50 % relativer Feuchte bzw. bei 100 % relativer Feuchte wird das Granulat solange gelagert, bis keine Gewichtszunahme mehr stattfindet.

Werden die Prüfkörper im trockenen Zustand verwendet, werden sie nach dem Spritzguss mindestens 48 h bei Raumtemperatur in trockener Umgebung, d.h. über Silicagel gelagert.

Konditionierte Prüfkörper werden nach ISO 1110 für 14 Tage bei 72 °C und 62 % relativer Feuchte gelagert.

Die Wasseraufnahme von GRIVORY G21 (PA 6I/6T; 2/1) beträgt 2 Gew.-% (bei 23 °C und 50 % relativer Feuchte) bzw. 7 Gew.-% (bei 23 °C und 100 % relativer Feuchte).

**Tabelle 2**

| **Beispiele** | | | **Nummer** | | | |
|---|---|---|---|---|---|---|
| | **Bedingung** | **Einheit** | **1** | **2** | **3** | **4** |
| PA 614 | - | Gew.-% | 52,5 | 37,5 | 22,5 | 45 |
| PA 6I/6T | - | Gew.-% | 17,5 | 12,5 | 7,5 | 15 |
| Glasfaser | - | Gew.-% | 30 | 50 | 62 | 30 |
| Carbonfaser | - | Gew.-% | - | - | 8 | - |
| Kalziumcarbonat | - | Gew.-% | - | - | - | 10 |

| **Tests** | | | **1** | **2** | **3** | **4** |
|---|---|---|---|---|---|---|
| Zug-E-Modul | trocken | MPa | 8000 | 14800 | 26500 | 8400 |
| | konditioniert | MPa | 7800 | 13600 | 25000 | 8300 |
| Reissfestigkeit | trocken | MPa | 150 | 205 | 200 | 160 |
| | konditioniert | MPa | 130 | 180 | 180 | 135 |
| Reissdehnung | trocken | % | 5 | 4 | 1,7 | 4,3 |
| | konditioniert | % | 6 | 4,5 | 1,9 | 5 |
| Wasseraufnahme | 23°C, 50% rF | Gew.-% | 0,6 | 0,5 | 0,4 | 0,5 |
| | 23°C, 100% rF | Gew.-% | 2,0 | 1,6 | 1,3 | 1,8 |

**Tabelle 3**

| **Vergleichsbeispiele** | | | **Nummer** | | | |
|---|---|---|---|---|---|---|
| | **Bedingung** | **Einheit** | **5** | **6** | **7** | **8** |
| PA 66 | - | Gew.-% | 52,5 | 37,5 | - | - |
| PA 6I/6T | - | Gew.-% | 17,5 | 12,5 | - | - |
| PA 12 | - | Gew.-% | - | - | - | - |
| PA 6 | - | Gew.-% | - | - | 50 | 60 |
| Glasfaser | - | Gew.-% | 30 | 50 | 50 | 30 |
| Mineral | - | Gew.-% | - | - | - | 10 |

| **Tests** | | | **5** | **6** | **7** | **8** |
|---|---|---|---|---|---|---|
| Zug-E-Modul | trocken | MPa | 9500 | 16500 | 15400 | 10000 |
| | konditioniert | MPa | 8500 | 15500 | 10600 | 6500 |
| Reissfestigkeit | trocken | MPa | 170 | 235 | 230 | 190 |
| | konditioniert | MPa | 155 | 210 | 150 | 130 |
| Reissdehnung | trocken | % | 3 | 2 | 3 | 4 |
| | konditioniert | % | 3 | 2 | 5 | - |
| Wasseraufnahme | 23 °C, 50 % rF | % | 1,5 | 1,4 | 1,5 | 2 |
| | 23 °C, 100 % rF | % | 5 | 4 | 5 | 7 |

Wie die Vergleiche von Beispiel 1 und Vergleichsbeispiel 5 und von Beispiel 2 und Vergleichsbeispiel 6 zeigen, ist die Wasseraufnahme der erfindungsgemässen Formmassen deutlich geringer als diejenige der entsprechenden Vergleichbeispiele.

Die erfindungsgemässe Formmasse des Beispiels 4 zeigt gegenüber der Formmasse des Vergleichsbeispiels 8 eine stark verringerte Wasseraufnahme.

Die erfindungsgemässen Formmassen zeigen ein geringeres Absinken des Zug-E-Moduls durch die Konditionierung.

Des weiteren zeigen sie bei entsprechendem Füllstoffgehalt eine höhere Reissdehnung.

## Patentansprüche

1. Gefüllte Polyamidformmassen mit geringer Wasseraufnahme und guten mechanischen Eigenschaften auf Basis von Polyamid 613, Polyamid 614, Polyamid 615, Polyamid 616, Polyamid 617, Polyamid 618, aus einem Blend, bestehend im wesentlichen aus den folgenden Komponenten:
(A) wenigstens ein aliphatisches Polyamid aus der Gruppe, bestehend aus Polyamid 613, Polyamid 614, Polyamid 615, Polyamid 616, Polyamid 617, Polyamid 618 oder deren Gemische,
(B) Polyamid, aufgebaut aus
(b₁) 60 bis 100 Gew.-Teile Einheiten, bevorzugt 60 bis 80 Gew.-Teile Einheiten, besonders bevorzugt 67 Gew.-Teile Einheiten, welche sich von Isophthalsäure (I) in Kombination mit Hexamethylendiamin (6) in nahezu äquimolarem Verhältnis ableiten,
(b₂) 0 bis 40 Gew.-Teile Einheiten, bevorzugt 20 bis 40 Gew.-Teile Einheiten, besonders bevorzugt 33 Gew.-Teile Einheiten, welche sich von Terephthalsäure (T) in Kombination mit Hexamethylendiamin (6) in nahezu äquimolarem Verhältnis ableiten,
wobei die Gewichtsteile der Komponenten (b₁) und (b₂) zusammen 100 Gew.-Teile ergeben,
und
wenigstens eine Füllstoffkomponente (C):
(C) ausgewählt aus der Gruppe, bestehend aus Glasfasern, Kohlenstofffasern, Metallfasern, Aramidfasern, Whiskers, Talk, Glimmer, Silikaten, Quarz, Titandioxid, Wollastonit, Kaolin, Kieselsäuren, Magnesiumcarbonat, Magnesiumhydroxid, Kreide, gemahlenem oder gefälltem Calciumcarbonat, Kalk, Feldspat, Bariumsulfat, permanentmagnetischen oder magnetisierbaren Metallen oder Legierungen, Glaskugeln, Hohlglaskugeln, hohlkugeligen Silikatfüllstoffen, natürlichen Schichtsilikaten, synthetischen Schichtsilikaten und Mischungen hiervon,
wobei die Gewichtsprozente der Komponenten (A) bis (C) zusammen 100% ergeben, und
wobei die Komponenten (A), (B) und (C) die folgenden Bedingungen erfüllen:
(A) + (B): 80 bis 20 Gew.-%,
Gewichtsverhältnis (A)/(B): 60/40 bis 90/10, bevorzugt 70/30 bis 85/15, besonders bevorzugt 70/30 bis 80/20, ganz besonders bevorzugt 75/25,
(C): 20 bis 80 Gew.-%, bevorzugt 21 bis 70 Gew.-%, besonders bevorzugt 31 bis 64 Gew.-%,
wobei die Polyamidformmassen gegebenenfalls zu den Komponenten (A) bis (C) übliche Zusatzstoffe (D) enthalten, und wobei deren Menge additiv zur Summe der Komponenten (A) bis (C) ist.

2. Polyamidformmassen gemäß Anspruch 1, **dadurch gekennzeichnet, dass** das aliphatische Polyamid eine Lösungsviskosität, gemessen in m-Kresol (0,5 Gew.-% bei 20 °C) von ηᵣₑₗ von zwischen 1,4 und 2,5, bevorzugt von zwischen 1,5 und 2,1 aufweist.

3. Polyamidformmassen gemäß einem der vorhergehenden Ansprüche 1 und 2, **gekennzeichnet durch** eine Wasseraufnahme (23 °C, 50 % relative Feuchtigkeit) von < 1 % bzw. von < 2,8 % (23 °C, 100 % relative Feuchtigkeit ).

4. Polyamidformmassen gemäß einem der vorhergehenden Ansprüche 1 bis 3, **gekennzeichnet durch** einen Zug-E-Modul (gemessen nach ISO 527) von mindestes 8000 MPa (trocken) bei einem Glasfasergehalt von 30 Gew.-%.

5. Polyamidformmassen gemäß einem der vorhergehenden Ansprüche 1 bis 4, **dadurch gekennzeichnet, dass** die Formmassen Reissdehnungen von 3,5 % oder mehr (gemessen nach ISO 527 ) bei einem Glasfaseranteil von mindestens 30 Gew.-% aufweisen.

6. Polyamidformmassen gemäß einem der vorhergehenden Ansprüche 1 bis 5, **dadurch gekennzeichnet, dass** als Zusatzstoffe (D) solche aus der Gruppe ausgewählt werden, der anorganischen Stabilisatoren, der organischen Stabilisatoren, der Gleitmittel, der Farbstoffe, der metallischen Pigmente, der Metallflitter, der metallbeschichteten Partikel, der halogenhaltigen Flammschutzmittel, der halogenfreien Flammschutzmittel, der Schlagzähmodifikatoren, der Antistatika, der Leitfähigkeitsadditive, insbesondere Ruß und/oder Kohlenstoffnanoröhrchen, der Entformungsmittel, der optischen Aufheller, oder Gemischen der genannten Zusatzstoffe, in den Formmassen enthalten sind.

7. Polyamidformmassen gemäß einem der vorhergehenden Ansprüche 1 bis 6, **dadurch gekennzeichnet, dass** als Füllstoffkomponente (C) Glasfasern eingesetzt werden, mit einem Durchmesser von 5 bis 20 µm, bevorzugt 5 - 15 µm, besonders bevorzugt von 5 bis 10 µm, wobei insbesondere der Querschnitt der Glasfasern rund, oval, elliptisch oder eckig ist und wobei besonders bevorzugt E-Glasfasern verwendet werden.

8. Polyamidformmassen gemäß einem der vorhergehenden Ansprüche 1 bis 7, **dadurch gekennzeichnet, dass** das aliphatische Polyamid insbesondere Polyamid 614 oder Polyamid 618 oder deren Mischung ist.

9. Verfahren zur Herstellung der Polyamidformmassen gemäß einem der Ansprüche 1 bis 8 auf üblichen Compoundieranlagen bei Zylindertemperaturen von 260 °C bis 320°C, wobei man zunächst den polymeren Anteil aufschmilzt und dann die Füllstoffe, insbesondere die Glasfasern und/oder andere Füllstoffe dosiert.

10. Verfahren zur Herstellung der Polyamidformmassen, gemäß irgendeinem vorhergehenden Anspruch 1 bis 9, **dadurch gekennzeichnet, dass** man zunächst aus den Komponenten (A) und (B) und den Füllstoffen (C) und gegebenenfalls den Zusatzstoffen (D) jeweils ein Compound in Granulatform herstellt und diese Granulate anschließend vermischt und gegebenenfalls noch weitere Granulatmengen von den Komponenten (A) und gegebenenfalls (B) hinzugegeben werden und dann die Granulate weiterverarbeitet.

11. Verwendung der Formmassen gemäß einem der Ansprüche 1 bis 10 mit Wasseraufnahmen von unter 1 % (23°C, 50% relative Luftfeuchtigkeit) bzw. von unter 2,8 % (23°C, 100 % relative Luftfeuchtigkeit ) zur Herstellung von Formkörpern, insbesondere von Spritzgussteilen, besonders bevorzugt von Antennengehäusen für mobile oder stationäre Kommunikationsgeräte.

12. Verfahren zur Herstellung von Formkörpern aus den Polyamidformmassen gemäß einem der Ansprüche 1 bis 8 durch Spritzguss, Extrusion, Spritzblasen, Direktcompoundierung und anderen Verformungstechniken.

13. Formkörper, erhältlich aus den Polyamidformmassen, gemäß einem der Ansprüche 1 bis 8.

14. Formkörper gemäß Anspruch 13, **dadurch gekennzeichnet, dass** er ein Antennengehäuse für mobile oder stationäre Kommunikationsgeräte ist.

## Claims

1. Filled polyamide molding materials with low water absorption and good mechanical properties based on polyamide 613, polyamide 614, polyamide 615, polyamide 616, polyamide 617, polyamide 618, of a blend, consisting essentially of the following components:
(A) at least one aliphatic polyamide from the group consisting of polyamide 613, polyamide 614, polyamide 615, polyamide 616, polyamide 617, polyamide 618, or mixtures thereof,
(B) polyamide, build up from
(b₁) 60 to 100 wt.-parts units, preferably 60 to 80 wt.-parts units, more preferably 67 wt.-parts units, derived from isophtalic acid (I) in combination with hexamethylene diamine (6) in almost equimolar ratio,
(b₂) 0 to 40 wt.-parts units, preferably 20 to 40 wt.-parts units, more preferably 33 wt.-parts units, derived from terephthalic acid (T) in combination with hexamethylene diamine (6) in almost equimolar ratio,
wherein the wt.-parts of the components (b₁) and (b₂) totals 100 wt.-parts, and at least one filler component (C):
(C) selected from the group consisting of glass fibers, carbon fibers, metal fibers, aramid fibers, whiskers, talc, mica, silicates, quartz, titanium dioxide, wollastonite, kaolin, silicic acids, magnesium carbonate, magnesium hydroxide, chalk, grounded or precipitated calcium carbonate, lime, feldspar, barium sulfate, permanent magnetic or magnetizable metals or alloys, glass balls, hollow glass balls, hollow spheroidal silicate fillers, natural layered silicates, synthetic layered silicates and mixtures thereof,
wherein the weight percents of the components (A) to (C) total 100%, and
wherein the components (A), (B) and (C) fulfill the following conditions:
(A) + (B): 80 to 20 wt.-%,
weight ratio (A) / (B): 60/40 to 90/10, preferably 70/30 to 85/15, more preferably 70/30 to 80/20, most preferably 75/25,
(C): 20 to 80 wt.-%, preferably 21 to 70 wt-.%, more preferably 31 to 64 wt.-%,
wherein the polyamide molding materials optionally comprise usual additives (D) in addition to the components (A) to (C), and wherein their amount is in addition to the sum of the components (A) to (C).

2. Polyamide molding materials according to claim 1, **characterized in that** the aliphatic polyamide has a solution viscosity, measured in m-cresol (0.5 wt.-% at 20°C) of ηᵣₑₗ between 1.4 and 2.5, preferably between 1.5 and 2.1.

3. Polyamide molding materials according to one of the preceding claims 1 and 2, **characterized by** a water absorption (23°C, 50% relative humidity) of < 1 % and of < 2.8 %, respectively (23°C, 100% relative humidity).

4. Polyamide molding materials according to one of the preceding claims 1 to 3, **characterized by** a tensile modulus of elasticity (measured according to ISO 527) of at least 8000 MPa (dry) at a glass fiber content of 30 wt.-%.

5. Polyamide molding materials according to one of the preceding claims 1 to 4, **characterized in that** the molding materials have elongations at break of 3.5 % or more (measured according to ISO 527) at a glass fiber content of at least 30 wt.-%.

6. Polyamide molding materials according to one of the preceding claims 1 to 5, **characterized in that** additives (D) are contained in the molding materials, which are selected from the group, consisting of the inorganic stabilizers, organic stabilizers, lubricants, dyes, metallic pigments, metal spangle, metal coated particles, halogenated flame retardants, halogen-free flame retardants, impact modifiers, antistatics, conductivity additives, in particular carbon black and/or carbon nanotubes, demolding agents, optical brighteners, or mixtures of the above additives.

7. Polyamide molding materials according to one of the preceding claims 1 to 6, **characterized in that** glass fibers with a diameter of 5 to 20 µm, preferably 5 - 15 µm, more preferably from 5 to 10 µm are used as filler component (C), wherein the cross-section of the glass fibers is especially circular, oval, elliptical or angular, and wherein E glass fibers are particularly preferably used.

8. Polyamide molding materials according to one of the preceding claims 1 to 7, **characterized in that** the aliphatic polyamide is particularly polyamide 614 or polyamide 618 or their mixture.

9. Method for producing polyamide molding materials according to one of the claims 1 to 8 on conventional compounding machines at cylinder temperatures of 260°C to 320°C, wherein the polymeric portion is melted first and then the fillers, particularly the glass fibers and/or other fillers, are dosed.

10. Method for producing polyamide molding materials according to any of the previous claim 1 to 9, **characterized in that** firstly a compound in granular form is made from the first components (A) and (B) and the fillers (C) and optionally the additives (D), respectively, and these granules are subsequently mixed and optionally additional granular quantities of the components (A) and optionally (B) are added, and then the granules are processed.

11. Use of the molding materials according to one of the claims 1 to 10 with water absorptions below 1 % (23°C, 50% relative humidity) and below 2.8 % (23°C, 100% relative humidity), respectively, for producing of molded parts, preferably injection molded parts, more preferably antenna housings for stationary or mobile communication devices.

12. Method for producing molded parts from polyamide molding materials according to one of the claims 1 to 8 by injection molding, extrusion, blow molding, direct compounding and other shaping methods.

13. Molded part, obtainable from the polyamide molding materials according to one of the claims 1 to 8.

14. Molded part according to claim 13, **characterized in that** it is an antenna housing for stationary or mobile communications devices.

## Revendications

1. Matières moulables de polyamide contenant des charges, dotées d'une faible absorption d'eau et de bonnes propriétés mécaniques, lesdites matières à base de polyamide 613, polyamide, 614, polyamide 615, polyamide 616, polyamide 617, polyamide 618 étant constituées, essentiellement, d'un mélange homogène des composants suivantes :
(A) au moins un polyamide aliphatique choisi dans le groupe constitué par le polyamide 613, la polyamide 614, le polyamide 615, le polyamide 616, le polyamide 617, le polyamide 618 ou leurs mélanges,
(B) un polyamide, réalisé à partir de
(b₁) 60 à 100 parts en poids d'unités, de préférence 60 à 80 parts en poids d'unités et notamment 67 parts en poids d'unités dérivées de l'acide isophtalique (I), combiné dans un rapport quasiment équimolaire à l'hexaméthylènediamine (6),
(b₂) 0 à 40 parts en poids d'unités, de préférence 20 à 40 parts en poids d'unités et notamment 33 parts en poids d'unités dérivées de l'acide téréphtalique (T), combiné dans un rapport quasiment équimolaire à l'hexaméthylènediamine (6),
la somme des parts en poids des composants (b₁) et (b₂) étant de 100 parts en poids,
et
au moins un composant servant de charge (C):
(C) choisi dans le groupe constitué par les fibres de verre, les fibres en carbone, les fibres métalliques, les barbes métalliques, le talc, le mica, les silicates, le quartz, le dioxyde de titane, la wollastonite, le kaolin, les silices, le carbonate de magnésium, l'hydroxyde de magnésium, la craie, le carbonate de calcium broyé ou précipité, la calcaire, le feldspath, le sulfate de Baryum, les métaux ou alliages à magnétisme rémanent ou magnétisables, les billes en verre, les billes creuses en verre, les charges de silicate en forme de billes creuses, le phyllosilicates naturels, les phyllosilicates synthétiques et leurs mélanges,
la somme des pourcentages en poids des composants (A) à (C) étant de 100 % et
les composants (A), (B) et (C) remplissant les conditions suivantes :
(A) + (B): 80 à 20 % en poids,
rapport de poids (A)/(B): 60/40 à 90/10, de préférence 70/30 à 85/15, notamment 70/30 à 80/20 et, avec une préférence particulière, 75/25,
(C): 20 à 80 % en poids, de préférence 21 à 70 % en poids, notamment 31 à 64 % en poids,
les matières moulables de polyamide contenant, outre les composants (A) à (C), le cas échéant des additifs (D) usuels, leur quantité s'additionnant à la somme des composants (A) à (C).

2. Matières moulables de polyamide selon la revendication 1, **caractérisées en ce que** le polyamide aliphatique présente en solution une viscosité ηᵣₑₗ comprise entre 1,4 et 2,5, de préférence entre 1,5 et 2,1, mesurée dans du m-crésol (0,5 % en poids à 20 °C).

3. Matières moulables de polyamide selon l'une des précédentes revendications 1 et 2, **caractérisées en ce que** leur absorption d'eau est < 1 % (23 °C, 50 % d'humidité relative) ou, respectivement, < 2,8 % (23 °C, 100 % d'humidité relative).

4. Matières moulables de polyamide selon l'une des précédentes revendications 1 à 3, **caractérisées en ce que** leur module d'élasticité en traction (mesuré selon ISO 527) est d'au moins 8000 MPa (à sec) si leur teneur en fibres de verre est de 30 % en poids.

5. Matières moulables de polyamide selon l'une des précédentes revendications 1 à 4, **caractérisées en ce que** leurs valeurs d'allongement à la rupture (mesurées selon ISO 527) atteignent au moins 3,5 % si leur teneur en fibres de verre est d'au moins 30 % en poids.

6. Matières moulables de polyamide selon l'une des précédentes revendications 1 à 5, **caractérisées en ce qu'**elles contiennent comme additifs (D) ceux qui sont choisis dans le groupe constitué par les agents stabilisants inorganiques, les agents stabilisants organiques, les lubrifiants, les colorants, les pigments métalliques, les paillettes métalliques, les particules dotées d'un revêtement métallique, les ignifugeants halogénés, les ignifugeants non-halogénés, les agents modificateurs de résilience, les agents antistatiques, les additifs de conductivité, s'agissant notamment de noir de carbone et/ou de nanotubes de carbone, les agents de démoulage, les agents azurants ou les mélanges desdits additifs contenus dans les matières moulables.

7. Matières moulables de polyamide selon l'une des précédentes revendications 1 à 6, **caractérisées en ce qu'**on met on oeuvre, en tant que composant servant de charge (C) des fibres de verre dont le diamètre est compris entre 5 et 20 µm, de préférence entre 5 et 15 µm et notamment entre 5 et 10 µm, la coupe transversale desdites fibres de verre étant notamment circulaire, ovale, elliptique ou polygonale, s'agissant avec une préférence particulière de fibres de verre de type E.

8. Matières moulables de polyamide selon l'une des précédentes revendications 1 à 7, **caractérisées en ce que** le polyamide aliphatique est notamment du polyamide 614 ou du polyamide 618 ou un mélange d'entre eux.

9. Procédé de préparation de matières moulables de polyamide selon l'une des revendications 1 à 8 sur des installations de compoundage usuelles, les températures de cylindre étant comprises entre 260 °C et 320 °C, une première étape consistant à faire fondre la partie polymère pour ensuite ajouter les charges, notamment les fibres de verre et/ou d'autres charges.

10. Procédé de préparation de matières moulables de polyamide selon l'une quelconque des précédentes revendications 1 à 9, **caractérisé en ce qu'**on prépare, dans un premier temps, un compound granulé à partir de chacun des composants (A) et (B) et des charges (C) et, le cas échéant, des additifs (D), pour ensuite mélanger ces granulats et y ajouter le cas échéant des quantités supplémentaires de granulats des composants (A) et le cas échéant (B), et ensuite soumettre les granulats à un traitement ultérieur.

11. Utilisation des matières moulables selon l'une des revendications 1 à 10 dotées d'une absorption d'eau inférieure à 1 % (23 °C, 50 % d'humidité relative) ou, respectivement, inférieure à 2,8 % (23 °C, 100 % d'humidité relative) pour produire des corps moulés, notamment des pièces moulées par injection, s'agissant avec une préférence particulière de boîtiers d'antenne destinés à des dispositifs de communication mobiles ou stationnaires.

12. Procédé de production de corps moulés à partir des matières moulables de polyamide selon l'une des revendications 1 à 8, les corps moulés étant obtenus par moulage par injection, par extrusion, par injection-soufflage, par compoundage direct ou par d'autres techniques de mise en forme.

13. Corps moulés pouvant être obtenus à partir des matières moulables de polyamide selon l'une des revendications 1 à 8.

14. Corps moulé selon la revendication 13, **caractérisé en ce qu'**il est un boîtier d'antenne destiné à des dispositifs de communication mobiles ou stationnaires.
